# EUROPEAN PATENT APPLICATION

(11) **EP 1 826 450 A2**
(43) Date of publication of application: **29.08.2007**
(21) Application number: 07001037.6
(22) Date of filing: 18.01.2007
(51) Int. Cl.: F16D 65/21, B60T 8/00

(54) **Electromechanical brake system**

(30) Priority: 28.02.2006 JP 2006053039
(71) Applicant: HITACHI, LTD., Chiyoda-ku Tokyo 100-8280 (JP)
(72) Inventor: Saito, Hiroyuki, c/o Hitachi Ltd. Int. Property Group., Tokyo 100-8220 (JP)
(74) Representative: Beetz & Partner

(57) **Abstract**

The invention relates to a electromechanical brake system, having controllers out of the component parts of the controllers, with regard to the electric caliper (101), control signals necessary to control the electric caliper are processed in the unsprung part controller (130) and the motor driver circuitry is provided in the sprung part controller (110). A multiplex communication line (121) for data exchange is provided between the sprung part controller and the unsprung part controller.

## Description

### BACKGROUND OF THE INVENTION

The present invention relates to an electromechanical brake system for vehicles.

In recent years, electromechanical brake systems have been developed which are designed to electrically control the diver's operation of the brake pedal and enable optimization of the brake force or automatic driving.

Such brake systems are chiefly configured to hydraulically transmitting the driver's brake pedal depressing force, but there are known some brake-by wire systems that cause the brake system to operate by an electric signal without using hydraulic pressure (JP-A-2003-287069, for example).

### SUMMARY OF THE INVENTION

An object of the present invention is to downsize the brake control system. Another object of the present invention is to realize of the brake control system having resistance to environment.

According to the present invention, there is provided an electromechanical brake system including an unsprung part controller integrated with an electric caliper containing a motor for generating a pressing force between a disc brake and pads of the wheel; and/or a sprung part controller for receiving a braking force command from a host control system, and transmitting a signal based on the braking force command to the unsprung part controller through a communication line.

The present invention enables downsizing the brake control system, and also realizes improving resistance to environment of the brake control system.

Other objects, features and advantages of the invention will become apparent from the following description of the embodiments of the invention taken in conjunction with the accompanying drawings.

### BRIEF DESCRIPTION OF THE DRAWINGS

Fig. 1 is a block diagram of an electromechanical brake system according to an embodiment of the present invention.
Fig. 2 is a block diagram of the brake system according to another embodiment of the present invention.
Fig. 3 is a diagram showing a detailed structure of an electric caliper 101 in Fig. 1.
Figs. 4A to 4E show process contents of a sprung part controller 110 in Fig. 1.
Figs. 5A to 5C show process contents of an unsprung part controller in Fig. 1.
Fig. 6 shows a general outline of control structure of the electromechanical brake in the embodiment of Fig. 1.
Fig. 7 is a block diagram of the electromechanical brake system according to still another embodiment of the present invention.
Fig. 8 is a block diagram of the electromechanical brake system according to yet another embodiment of the present invention.
Fig. 9 is a block diagram of the electromechanical brake system according to a still further embodiment of the present invention.

### DESCRIPTION OF THE EMBODIMENTS

Embodiments of the present invention will be described with reference to the accompanying drawings.

### [Embodiment 1]

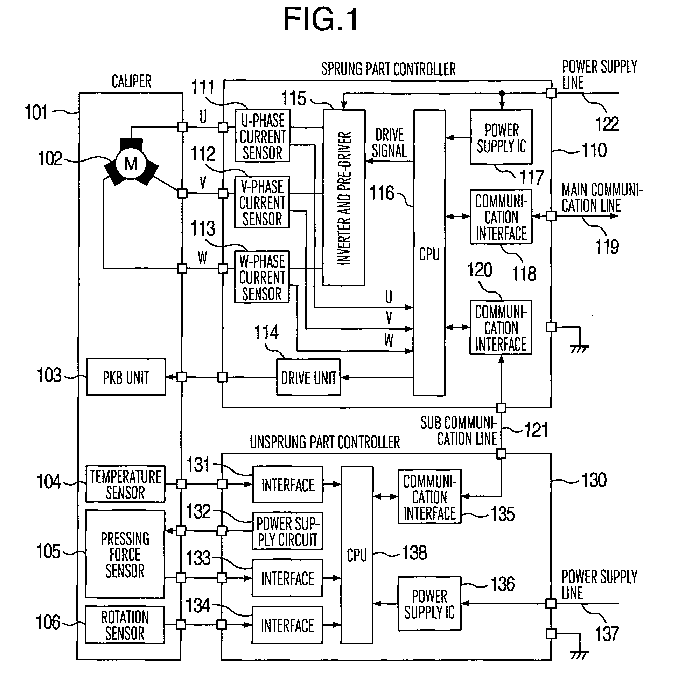

Fig. 1 is a block diagram of an electromechanical brake system according to an embodiment of the present invention. In this embodiment, out of the component units of the controllers, with regard to the electric caliper, signals necessary to control the electric caliper are processed by the unsprung part controller integrated with the electric caliper, a motor driver section is disposed in the sprung part controller, and a multiplex communication line for data exchange is provided between the sprung part controller and the unsprung part controller.

An electric caliper 101 includes a motor 102, which is a brushless motor for driving a brake piston, a temperature sensor 104 for detecting a motor over-temperature, a sensor 105 for detecting a pressing force of the brake piston, and a rotation angle sensor 106 for detecting a motor rotation angle. In the case of an electromechanical brake for rear wheels, a parking brake (hereafter referred to as PKB) unit 103 is sometimes included, such as a solenoid for fixing the brake piston, which performs a PKB function. Note that the section on the car body side with respect to the suspension system is here called the sprung part and the section on the wheel side with respect to the suspension system is called the unsprung part.

The unsprung part controller 130 is installed integrated with the electric caliper 101. The unsprung part controller 130 includes an interface circuit 131 for processing a signal from a temperature sensor 104, a power supply circuit 132 for supplying power to the pressing force sensor 105, an interface process circuit 133 for processing output from the pressing force sensor 105 and inputting a signal to a CPU 138, and an interface circuit 134 (such as a resolver IC) for processing output from the rotation angle sensor 106. The unsprung part controller 130 further includes a section where by receiving power through a power supply line 137 from the sprung part, a power supply IC 136 generates and supplies stable power to the CPU 138 or other units. The unsprung part controller 130 also includes a communication line 121 and a communication interface 135 intended for communication with the sprung part controller 110, and thereby realizes communication between the sprung part controller 110 and the unsprung part controller 130.

The sprung part controller 110 is disposed in the sprung part. The sprung part controller 110 includes current sensors 111, 112, and 113 for detecting the motor currents of different phases (U, V and W) of the electric caliper 101, and performs motor current control (in vector control) by controlling a drive signal to an inverter plus pre-driver unit 115 based on rotation angle information transferred to the CPU 116 from the unsprung part controller 130 through the communication line. A DC side power supply to the motor is supplied from a power supply line 122. The power supply line 122 also supplies power to a power supply IC 117, which in turn supplies power to the CPU 116 and other units. The sprung part controller 110 further includes the communication line 121 and a communication interface 120 intended for communication with the unsprung part controller 130, and thereby realizes communication between the sprung part controller 110 and the unsprung part controller 130. Furthermore, a main communication line 119 is provided for receiving a braking force command, which is to be output, from a host control system in the vehicle, such as an integrated control system, and communication data is received into the CPU 116 through the communication interface 118.

In this embodiment, for the motor a DC brushless motor is used, but a brush DC motor may be used to form the electric caliper.

In an electric caliper for rear wheels, a parking brake (PKB) mechanism is also often provided. In this embodiment, the electric caliper 101 includes a PKB unit 103, such as a solenoid. The sprung part controller 110 includes a PKB drive unit 114, and the PKB drive unit 114 drives the PKB by a signal from the CPU 116.

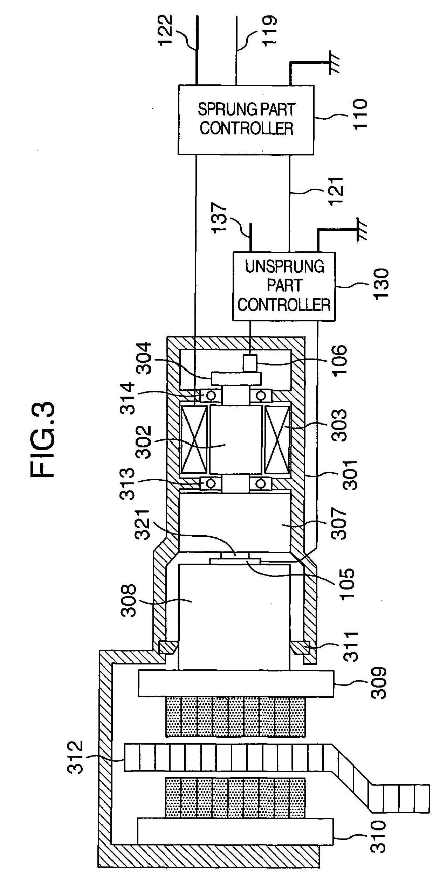

Fig. 3 is a diagram showing a detailed structure of the electric caliper 101 in Fig. 1.

The controller 110 controls an energizing current supplied to a stator coil 303 of the motor, thereby controlling an output torque of a rotor 302. One end of the output shaft (left in the figure) is supported by bearings 313 and connected to an input shaft of a speed-reduction and rotation-linear motion conversion mechanism 307. As a piston 308 supported by a seal 311 is pushed by the output shaft 321 of the above mechanism, a pad 309 is pressed to the disc rotor 312. By a resulting reaction, a caliper body 301 is moved, so that a pad 310 on the other hand is pressed to the disc rotor 312.

To control the pressing force, a pressing force sensor 105 is disposed at the end of the output shaft 321. To control the torque and the rotational speed of the motor, a magnet 304 and the rotation sensor 106 are disposed on the other side of the output shaft of the motor.

By using output of the rotation sensor 106, the unsprung part controller 130 calculates a rotation angle of the motor. A calculated rotation angle is transferred to the sprung part controller 110 through a sub communication line 121, which is a multiplex communication line 121. The sprung part controller 110 performs motor current control by using an output value of the rotation angle sensor. A pressing force command value from a host control system is input to the sprung part controller 110 through the main communication line 119, which is a multiplex communication line. This pressing force command value is transferred through the sub communication line 121 to the unsprung part controller 130 to perform the pressing force.

Pressing force control is performed by feeding back an output value of the pressing force sensor 105.

Power supply lines 137 and 122 to supply power to the motor, for example, are connected, respectively, to the unsprung part controller 130 and the sprung part controller 110.

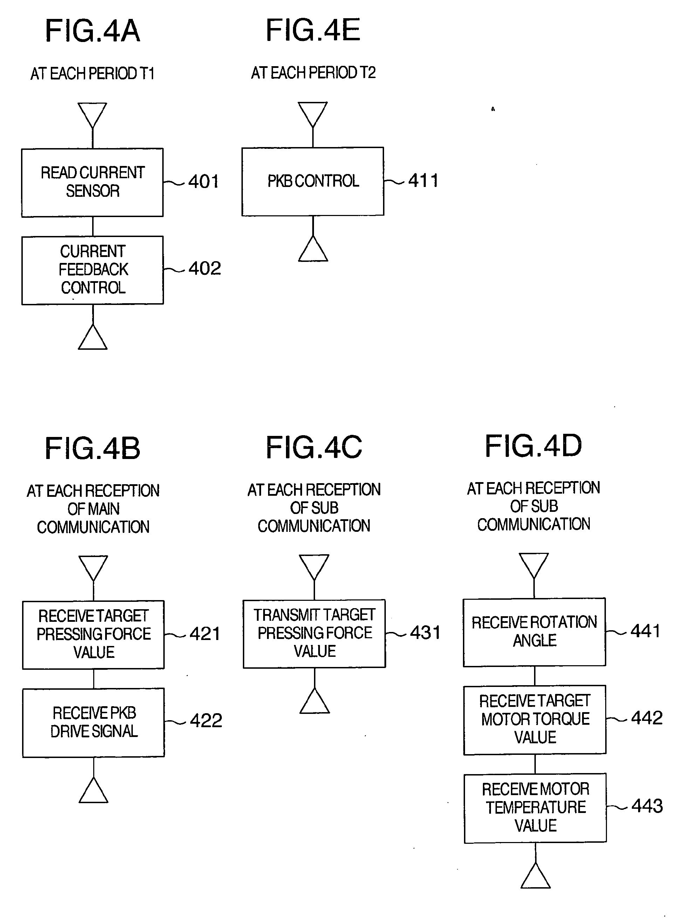

Figs. 4A, 4B, 4C, 4D, and 4E show processes performed by the sprung part controller 110 shown in Fig. 1.

The functions of the unsprung part controller 110 are:
1) motor control based on sensor signals and a motor torque target value from the unsprung part controller 130;
2) communication control for receiving a pressing force command from the host system and transferring the command to the unsprung part controller 130; and
3) PKB control.

In motor control, as shown in Fig. 4A, the sprung part controller 110 reads current sensor values of respective phases at every period T1 in process 401. In process 402, the sprung part controller 110 performs motor current feedback control to make a motor real torque follow a motor target torque value received from the unsprung part controller 130 by sub communication. In feedback control, a general control method, such as PID control, may be used.

In main communication with the host system, process contents shown in Fig. 4B are carried out each time a main communication is received. In process 421, the sprung part controller 110 receives a pressing force target value from the host system. In process 422, the sprung part controller 110 receives a PKB drive signal according to a PKB drive request signal.

In a sub communication with the unsprung part controller 130, as shown in Fig. 4C, in process 431, the sprung part controller 110 transfers a pressing force target value, received from the host system, to the unsprung part controller 130. As shown in Fig. 4D, in process 441, the sprung part controller 110 receives a rotation angle and, in process 442, receives a target motor torque value determined in a pressing force servo control carried out in the unsprung part controller 130 and, in process 433, further receives a motor temperature value in consideration of fail-safe motor control.

As shown in Fig. 4E, PKB control is performed at every period T2.

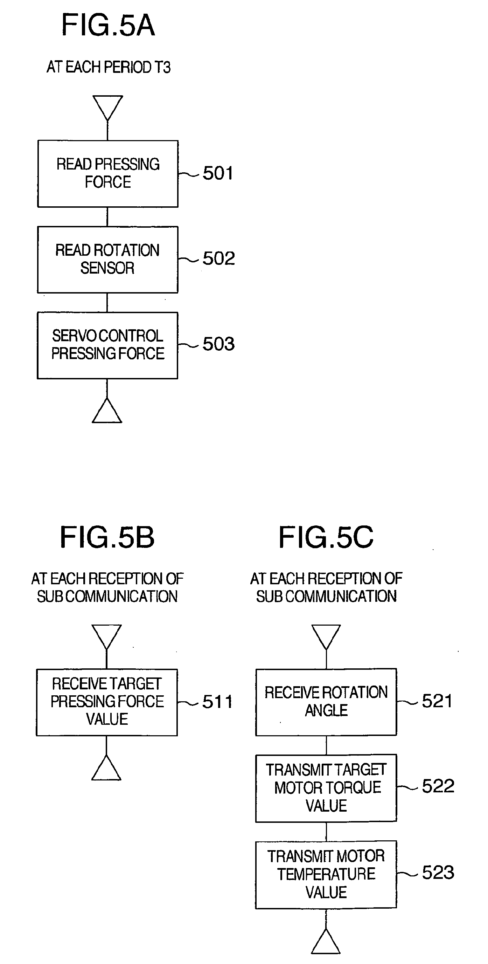

Figs. 5A, 5B, and 5C indicate process contents of the unsprung part controller 130 shown in Fig. 1.

The functions of the unsprung part controller 130 are:
1) pressing force servo control based on a pressing force target value and a pressing force sensor signal from the sprung part controller 110; and
2) communication control for transferring a rotation angle sensor signal and a motor temperature sensor signal to the sprung controller 110.

In pressing force servo control, as shown in Fig. 5A, the unsprung part controller 130 reads a pressing force value at every period T3 in process 501, and also reads a rotation sensor value in process 502. The unsprung part controller 130, in process 503, performs pressing force servo control to make a pressing force real value to follow a pressing force target value received from the sprung part controller 110 by sub communication. This pressing force servo control may be performed by a general control method, such as PID control. Control output becomes a target motor torque or a motor current.

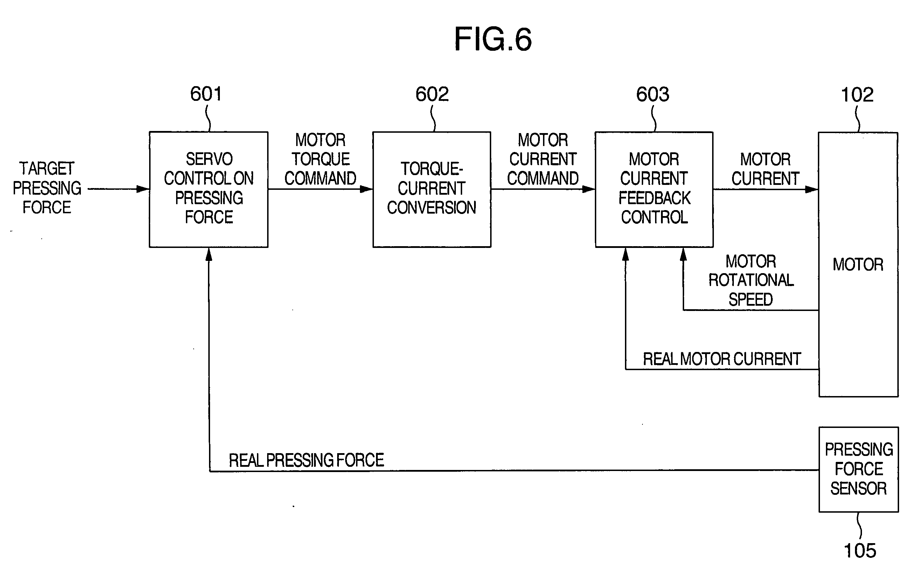

In sub communication between the sprung part controller 110 and, as shown in Fig. 5B, the unsprung part controller 130 receives a pressing force target value received from the host system in process 511. As shown in Fig. 5C, the unsprung part controller 130 transmits a rotation angle in process 521, transmits a motor torque target value necessary for motor control, which is performed in the sprung part controller 110, and in process 523 also transmits a motor temperature value in consideration of fail-safe motor control. Fig. 6 shows a general outline of control structure of the electromechanical brake in the embodiment shown in Fig. 1.

Braking force servo control is performed by inputting a braking force command received through multiplex communication and a deviation of a real braking force, measured with the pressing force sensor 105, into a braking force servo block 601. A motor torque command value determined by the braking force servo is converted by a torque-current conversion block 602 into a motor current command value. A motor current feedback block 603 performs feedback control based on a motor real current and a motor rotational speed to control a current to the motor 600.

### [Embodiment 2]

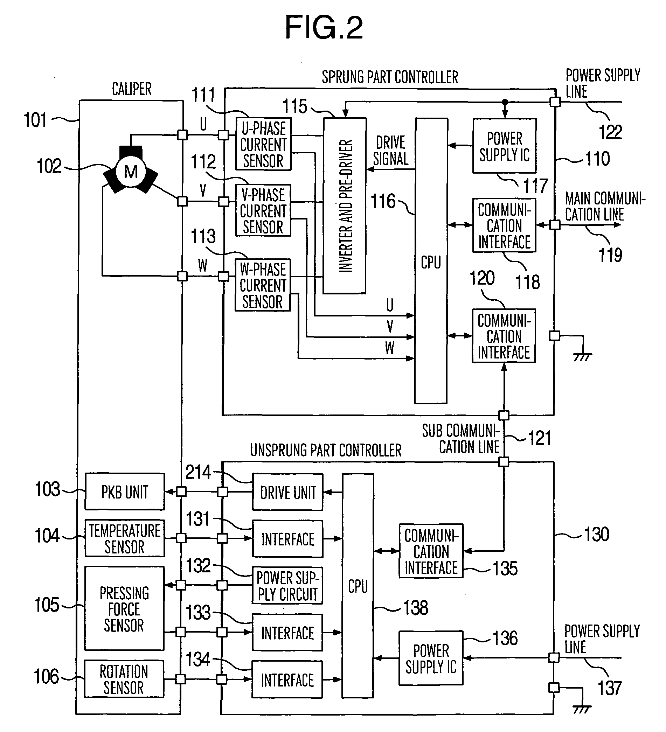

Fig. 2 is a block diagram of the brake system according to another embodiment of the present invention. In this embodiment, a PKB drive unit 214 for driving the PKB unit 103 is disposed in the unsprung part controller 230, and the PKB is driven by a signal from the CPU 138. The other component units and functions are the same as those in the first embodiment.

### [Embodiment 3]

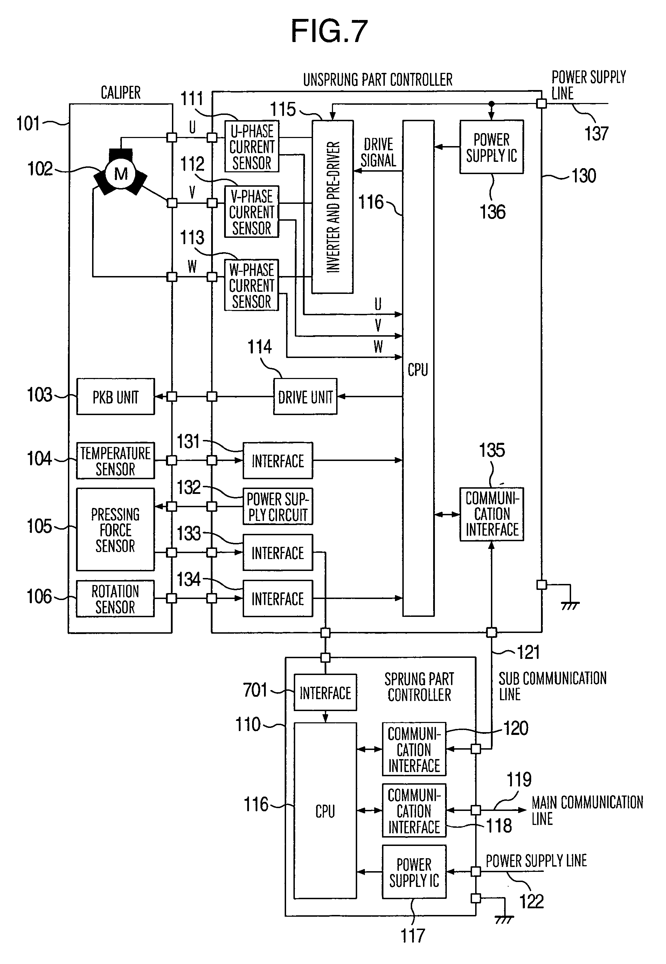

Fig. 7 is a block diagram of the electromechanical brake system according to still another embodiment of the present invention. In this embodiment, out of the component parts of the controllers, for control of the caliper, a means for processing signals necessary to control the caliper and the motor driver IC are disposed in the unsprung controller 230, and the PKB is driven by a signal from the CPU 138. A multiplex communication line for data exchange is provided between the sprung part controller and the controller for the unsprung part, and braking force is controlled by the sprung part controller.

The electric caliper 101 includes a brushless motor 102 for driving the brake piston 308 (Fig. 3), a temperature sensor 104 for detecting a motor over-temperature, a piston pressing force sensor 105, a piston pressing force sensor 105, and a rotation sensor 106 for detecting a motor rotation angle. In the case of an electromechanical brake for rear wheels, a PKB unit 103, such as a solenoid for fixing the brake piston, is sometimes provided.

The unsprung part controller 130 is mounted integrated with the electric caliper 101. The unsprung part controller 130 includes an interface circuit 131 for processing a signal from the motor temperature sensor 104, a power supply circuit 132 for supplying electric power to the pressing force sensor 105, an interface circuit 133 for processing output of the pressing force sensor and inputting a sensor signal to the sprung part controller 110, which will be described later, and an interface circuit 134 (such as a resolver IC) for processing output of the motor rotation angle sensor. The unsprung part controller 130 includes current sensors 111, 112, and 113 for detecting motor currents of respective phases (U, V, and W phases) of the electric caliper 101, and performs motor current control (in vector control) by controlling a drive signal to a drive signal to an inverter plus pre-driver unit 115 based on rotation angle information detected by the rotation sensor 106. A DC side power supply to the motor is supplied from a power supply line 137. The power supply line 137 supplies power to a power supply IC 136, which in turn supplies power to the CPU 136 and other units. The unsprung part controller 130 further includes the communication line 121 and a communication interface 135 intended for communication with the sprung part controller 110, and thereby realizes communication between the sprung part controller 110 and the unsprung part controller 130.

The sprung part controller 110 is disposed on the sprung part (the car body side). The sprung part controller 110 includes the communication line 121 and a communication interface 120 intended for communication with the unsprung part controller 130, and thereby realizes communication between the sprung part controller 110 and the unsprung part controller 130. Furthermore, a main communication line 119 for receiving a target pressing force from the host system of the vehicle is provided in the sprung part controller 110, and through the communication interface 118, communication data is received into the CPU 116. The sprung part controller 110 includes a section where by receiving power through a power supply line 122 from the sprung part, a power supply IC 117 generates and supplies stable power to the CPU 116 or other units. In the sprung part controller, the CPU 116 calculates a motor current or motor torque corresponding to a pressing force command value, and transmits this information through the communication line 121 to the unsprung part controller 130 to realize motor control. A real pressing force necessary for pressing force control is sent through the interface circuit 133 of the unsprung part controller 130, and is received into the CPU 116 through an interface process circuit 701 in the sprung part controller 110. In the sprung part controller, there is provided a main communication line 119 for receiving a braking force command, which is to be output, from the host control system of the vehicle, such as an integrated control system, for example, and communication data is received into the CPU 116 through the communication interface 118.

In an electric caliper for rear wheels, the parking brake mechanism is also often provided. In this embodiment, the electric caliper 101 includes a PKB unit 103, such as a solenoid. The unsprung part controller includes the PKB drive unit 114, and the PKB drive unit 114 drives the PKB by a signal from the CPU 116.

### [Embodiment 4]

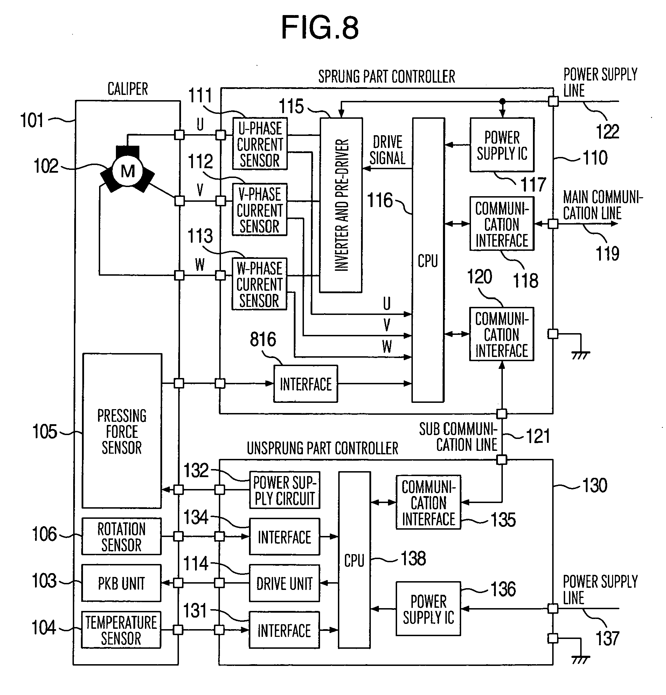

Fig. 8 is a block diagram of the electromechanical brake system according to yet another embodiment of the present invention. In this embodiment, out of the component units of each of the controllers, with regard to the electric caliper, a process unit for processing signals necessary to control the electric caliper is disposed in the unsprung part controller, a motor driver section and a braking force control section are disposed in the sprung part controller, and a multiplex communication line for data exchange is provided between the controller disposed at the sprung part and the controller disposed at the unsprung part.

The electric caliper 101 includes a brushless motor 102 for driving the brake piston 308 (Fig. 3), a temperature sensor 104 for detecting a motor over-temperature, a piston pressing force sensor 105, a piston pressing force 105, and a rotation sensor 106 for detecting a motor rotation angle. In the case of an electromechanical brake for rear wheels, a PKB unit 103, such as a solenoid for fixing the brake piston, is sometimes provided.

The unsprung part controller 130 is mounted integrated with the electric caliper 101. The unsprung part controller 130 includes an interface circuit 131 for processing a signal from the motor temperature sensor 104, a power supply circuit 132 for supplying electric power to the pressing force sensor 105, and an interface processing circuit 134 (such as a resolver IC) for processing output of the motor rotation angle sensor. In an electric caliper for rear wheels, the parking brake (PKB) mechanism is often disposed in the caliper. The electric caliper 101 includes a PKB unit 103, such as a solenoid, and the PKB is driven by a signal from the CPU 138.

The unsprung part controller 130 further includes a section where by receiving power through a power supply line 137 from the sprung part, a power supply IC 136 generates and supplies stable power to the CPU 138 or other units. The unsprung part controller 130 also includes the communication line 121 and the communication interface 135 intended for communication with the sprung part controller 110, and thereby realizes communication between the sprung part controller 110 and the unsprung part controller 130.

The functions of the unsprung part controller 130 are supplying power to the pressing force sensor 105, processing a signal from the rotation sensor 106, processing a signal from the temperature sensor 104, and operating the PKB unit 103. The CPU 138 controls the operation of those peripheral units, and transmits and receives control information to and from the sprung part controller 110 through the communication line 121.

The sprung part controller 110 is disposed in the sprung part (the car body side). The sprung part controller 110 includes current sensors 111, 112 and 113 for detecting motor currents of respective phases (U, V and W) of the electric caliper 101, and performs motor current control (in vector control) by controlling a drive signal to the inverter plus pre-driver 115 based on rotation angle information transferred from the unsprung part controller 130 to the CPU 116 through the communication line 121. A DC side power supply to the motor is supplied from the power supply line 122. The sprung part controller 110 further includes an interface circuit 816 for processing output of the pressing force sensor and inputting a pressing force signal to the CPU 116. The sprung part controller 110 performs pressing force control so that a real pressing force value follows a pressing force target value received from the host system through the main communication line 119. The power supply line 122 supplies power to the power supply IC 117, which supplies power to the CPU 116 and other units. The sprung part controller 110 further includes the communication line 121 and the communication interface 120 intended for communication with the unsprung part controller 130, and thereby realizes communication between the sprung part controller 110 and the unsprung part controller 130. The sprung part controller 110 includes the main communication line 119 for receiving a braking force command, which is to be output, from the host control system of the vehicle, such as an integrated control system, so that communication data is received into the CPU 116 through the communication interface 118.

### [Embodiment 5]

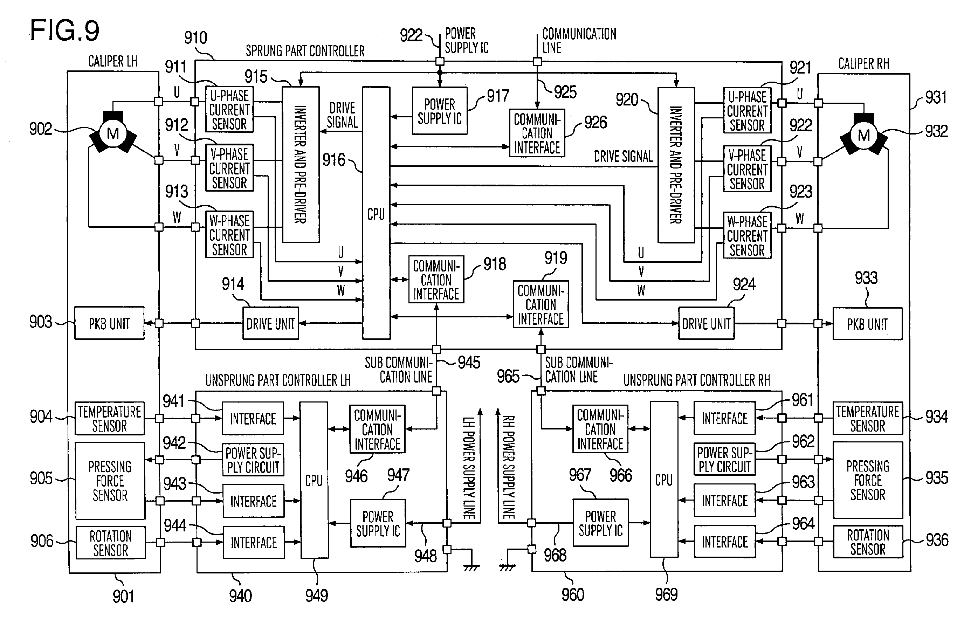

Fig. 9 is a block diagram of the electromechanical brake system according to a still further embodiment of the present invention.

This embodiment is intended to make it possible to perform motor control either on the left or right electric caliper by one sprung part controller.

The electric caliper 901 for LH wheels includes a brushless motor 902 for driving the brake piston 308 (Fig. 3), a temperature sensor 904 for detecting a motor over-temperature, a piston pressing force sensor 905, and a rotation sensor 906 for detecting a motor rotation angle. In the case of an electromechanical brake for rear wheels, a PKB unit 903, such as a solenoid for fixing the brake piston, is sometimes provided.

A unsprung part controller 940 for LH wheels is disposed integrated with the electric caliper 901. This controller 940 includes an interface circuit 941 for processing a signal from the motor temperature sensor 904, a power supply circuit 942 for supplying power to the pressing force sensor 905, an interface process circuit 943 for processing output of the pressing force sensor 905 and inputting a signal to the CPU 949, and an interface process circuit 944 (such as a resolver circuit IC) for processing output of a motor rotation angle sensor 906. The unsprung part controller 940 also includes a section where by receiving power through the power supply line 948 from the sprung part, a power supply IC 947 generates and supplies stable power to the CPU 949 and other units. The unsprung part controller 940 includes a communication line 945 and a communication interface 946 intended for communication with the sprung part controller 910, and thereby realizes communication between the sprung part controller 910 and the LH-wheel unsprung part controller 940.

The electric caliper 931 for right wheels includes a brushless motor 932 for driving the brake piston 308 (Fig. 3), a temperature sensor 934 for detecting a motor over-temperature, a piston pressing force sensor 935, and a rotation sensor 936 for detecting a motor rotation angle. In the case of the electromechanical brake for rear wheels, a PKB unit 933, such as a solenoid for fixing the brake piston, is sometimes provided.

An unsprung part controller 960 for RH wheels is provided integrated with the electric caliper 931. The controller 960 includes an interface circuit 961 for processing a signal from the motor temperature sensor 934, a power supply circuit 962 for supplying power to the pressing force sensor, an interface process circuit 963 for processing output of the pressing force sensor and inputting a signal to the CPU 969, and an interface process circuit 964 (such as a resolver IC) for processing output of the motor rotation angle sensor 936. The unsprung part controller 960 includes a section where by receiving power through a power supply line 968 from the sprung part, a power supply IC 967 generates and supplies stable power to the CPU 969 and other units. The unsprung part controller 960 further includes a communication line 965 and a communication interface 966 intended for communication with the sprung part controller 910, and thereby realizes communication between the sprung part controller 910 and the RH-wheel unsprung part controller 960.

The sprung part controller 910 is disposed in the sprung part (the car body side).

The sprung part controller 910 includes current sensors 911, 912, and 913 for detecting motor currents of respective phases (U, V, and W) of the electric caliper 901 for LH wheels, and performs motor current control (in vector control) by controlling a drive signal to an LH-wheel inverter plus pre-driver 915 based on rotation angle information transferred from the LH-wheel unsprung part controller to the CPU 916 through a communication line 945. A DC side power supply to the motor is supplied from a power supply line 922. The power supply line 922 also supplies power a power supply IC 917, which in turn supplies power to the CPU 916 and other units. The sprung part controller 910 also includes a communication line 945 and a communication interface 918 intended for communication with the LH-wheel unsprung part controller 940, and thereby realizes communication between the sprung part controller 910 and the LH-wheel unsprung part controller 940.

The sprung part controller 910 includes current sensors 921, 922, and 923 for detecting motor currents of respective phases (U, V and W) of the RH wheels, and performs motor current control (in vector control) by controlling a drive signal to a RH inverter plus pre-driver 920 based on rotation angle information transferred from an RH-wheel unsprung part to the CPU 916 through a communication line 965. A DC side power supply to the motor is supplied from the power supply line 922. The sprung part controller 910 includes a communication line 965 and a communication interface 919, which are intended for communication with the LH-wheel unsprung part controller 960, and realizes communication between the sprung part controller 910 and the RH-wheel unsprung part controller 960.

Furthermore, a main communication line 925 for receiving a breaking force command, which is to be output, from the host control system of the vehicle, such as an integrated control system, and through a communication interface 926, communication data is received into the CPU 916.

In this embodiment, for the motor, a DC brushless motor is used, but there is no problem if the electric caliper is formed by a DC brush motor.

In the electric caliper for rear wheels, a parking brake (PKB) mechanism is also often provided in the caliper. In this embodiment, a PKB unit 903, such as a solenoid, is provided in the LH wheel caliper 901, and a PKB unit 933, such as a solenoid, is provided in the RH wheel electric caliper 931. The sprung part controller 910 includes a LH-wheel PKB drive unit 914 and a RH-wheel PKB drive unit 924, and the PKB for each wheel is driven by a signal from the CPU 916.

Though the embodiments described above are related to the structure of the electromechanical brake system, those embodiments can be applied to various kinds of automotive devices using a DC brushless motor.

It should be further understood by those skilled in the art that although the foregoing description has been made an embodiments of the invention, the invention is not limited thereto and various changes and modifications may be made without departing from the spirit of the invention and the scope of the appended claims.

The above features and embodiments may be combined in any way partly or as a whole.

## Claims

1. An electromechanical brake system, comprising:
an unsprung part controller (130) integrated with an electric caliper (101) including a motor (102) to generate a pressing force between pads (309, 310) and a disc rotor of a wheel; and
a sprung part controller (110) for receiving a braking force command from a host control system and transmitting a signal based an said braking force command to said unsprung part controller through communication means (121).

2. The electromechanical brake system according to claim 1, wherein said sprung part controller (110) includes a current control unit (115) for controlling currents for said motor (102) and said unsprung part controller (130) includes a pressing force control unit for controlling said pressing forces of said pads (309, 310), wherein communication means (121) is intended for communication between said current control unit (115, 603) and said pressing force control unit (601).

3. The electromechanical brake system according to claim 1 or 2, wherein a signal output from a rotation angle sensor (106) for detecting a rotation angle of an output shaft (321) of said motor (102) is transmitted to said current control unit (115, 603) of said sprung part controller (110) through said pressing force control unit (601) of said sprung part controller (130).

4. The electromechanical brake system according to at least one of claims 1 to 3, wherein said sprung part controller (110) includes a first communication unit (119) for receiving a braking force command from said host control system, and a second communication unit (121) for receiving sensor signals from said electric caliper (101) sent from said unsprung part controller (130).

5. The electromechanical brake system according to at least one of claims 1 to 4, wherein said unsprung part controller (130) receives a pressing force command value via said second communication unit provided in said current control unit (115, 603) in said sprung part controller (110), and also performs follow-up control to make a real pressing force value follow said pressing force command value.

6. The electromechanical brake system according to at least one of claims 1 to 5, wherein said sprung part controller (110) includes a pressing force control unit (601) for controlling said pressing forces of said pads (309, 310), and said unsprung part controller (130) includes a current control unit (115, 603) for controlling currents to said motor (102), wherein communication means (121) is intended for communication between said current control unit and said pressing force control unit (601).

7. The electromechanical brake device according to at least one of claims 1 to 6, wherein a signal output from a rotation angle sensor (106) for detecting a rotation angle of an output shaft (321) of said motor (102) is transmitted to said current control unit (115, 603) of said sprung part controller (110) through said pressing force control unit (601) of said sprung part controller (130).

8. The electromechanical brake system according to at least one of claims 1 to 7, wherein said sprung part controller (110) includes a first communication means (119) for receiving a braking force command from said host control system, and a second communication means (121) for receiving sensor signals from said electric caliper (101) sent from said unsprung part controller (130).

9. The electromechanical brake system according to at least one of claims 1 to 8, wherein said unsprung part controller (130) receives a motor current command values via said second communication unit provided in said pressing force unit (601) in said sprung part controller (110), and performs current control to make a real motor current value follow said motor current command value.

10. The electromechanical brake system according to at least one of claims 1 to 9, wherein said sprung part controller (110) includes a current control unit (115, 603) for controlling currents to said motor (102), and unsprung part controller (130) includes means for converting a signal output from a rotation angle sensor (106) for detecting a rotation angle of an output shaft (321) of said motor (102) and transmitting an output signal to said sprung part controller (110).

11. The electromechanical brake system according to at least one of claims 1 to 10, wherein said sprung part controller includes a left and a right current control unit for controlling currents of motors (902, 932) of electric calipers (901, 931) respectively provided at a left hand side wheel and a right hand side wheel, and wherein each of said unsprung part controllers (940, 960), provided respectively at said left hand side wheel and said right hand side wheel, includes a pressing force control unit for controlling pressing forces of said pads (309, 310) either at said left or right electric caliper (901 or 931), and each of said unsprung part controllers (940, 960) includes communication means (945, 965) for communication between one of said current control units (603) and one of said pressing force control units (601).
